# EUROPEAN PATENT SPECIFICATION

(11) **EP 2 175 165 B1**
(45) Date of publication and mention of the grant of the patent: **17.08.2011**
(21) Application number: 09170912.1
(22) Date of filing: 22.09.2009
(51) Int. Cl.: F16H 7/08

(54) **Chain tensioner**
Kettenspanner
Tendeur de chaîne

(30) Priority: 08.10.2008 JP 2008261497; 17.12.2008 JP 2008320860; 22.12.2008 JP 2008325284
(43) Date of publication of application: 14.04.2010
(73) Proprietor: NTN Corporation, Osaka-shi, Osaka (JP)
(72) Inventor: Ryouno, Yoshiaki c/o NTN Corporation, Iwata-shi Shizuoka (JP); Sato, Seiji c/o NTN Corporation, Iwata-shi Shizuoka (JP); Hayakawa, Hisashi c/o NTN Corporation, Iwata-shi Shizuoka (JP); Onimaru, Kouichi c/o NTN Corporation, Iwata-shi Shizuoka (JP); Kitano, Satoshi c/o NTN Corporation, Iwata-shi Shizuoka (JP); Furukawa, Tasuku c/o NTN Corporation, Iwata-shi Shizuoka (JP)
(74) Representative: Grünecker, Kinkeldey, Stockmair & Schwanhäusser Anwaltssozietät

(56) References cited:
- EP-A- 0 715 093
- EP-A- 1 188 955
- WO-A-98/05883
- DE-A1- 4 017 601
- DE-A1- 19 929 668
- DE-A1-102006 031 516

## Description

### BACKGROUND OF THE INVENTION

This invention relates to a chain tensioner for maintaining the tension of a timing chain for driving camshafts of an automotive engine. [0002] In a typical automotive engine, the rotation of the crankshaft is transmitted to camshafts through a timing chain to rotate the camshafts, thereby opening and closing valves of combustion chambers. In order to keep the tension of the chain in an optimum range, a tension adjusting device is frequently used which comprises a chain guide pivotable about a pivot shaft, and a chain tensioner for pressing the chain through the chain guide.

EP 1 188 955 971 discloses a chain tensioner according to the preamble of claim 1.

One further known chain tensioner used in a tension adjusting device is disclosed in JP Patent Publication 2006-153118A which includes a cylindrical cylinder having open and closed ends and inserted in a tensioner mounting hole formed in an engine cover with its open end located inside the engine cover. The cylinder has a flange formed on the outer periphery thereof and supported on the outer surface of the engine cover. A plunger is axially slidably mounted in the cylinder. An oil supply passage is formed in the cylinder through which hydraulic oil supplied into an oil hole open to the inner periphery of the tensioner mounting hole is introduced into a pressure chamber defined by the cylinder and the plunger. This chain tensioner further includes a check valve provided at the oil supply passage to prevent backflow of hydraulic oil, and a return spring biasing the plunger in the direction to protrude from the cylinder. A leakage gap is defined between sliding surfaces of the plunger and the cylinder through which hydraulic oil in the pressure chamber can leak.

In this chain tensioner, when the tension of the chain increases while the engine is running, under the tension of the chain, the plunger is pushed into the cylinder, thereby reducing the tension of the chain. At this time, hydraulic oil in the pressure chamber leaks through the oil leakage gap between the sliding surfaces of the plunger and the cylinder. Thus, under the dampening force due to the viscous resistance of hydraulic oil flowing through the leakage gap, the plunger is pushed in slowly.

This dampening force is determined by the size of the leakage gap between the sliding surfaces of the plunger and the cylinder. The size of the leakage gap in radius is ordinarily set to an extremely small value of 0.015 to 0.080 mm.

On the other hand, when the tension of the chain decreases while the engine is running, the plunger protrudes from the cylinder under the biasing force of the return spring, thereby eliminating slackness of the chain. In this state, since hydraulic oil supplied from the oil pump flows into the pressure chamber through the oil supply passage, the plunger moves quickly in the protruding direction.

The cylinder of this chain tensioner has a plurality of bolt holes formed in a flange provided on the outer periphery of the cylinder. In order to mount this chain tensioner to the engine cover, the cylinder is inserted into the tensioner mounting hole of the engine cover until the flange is supported on the outer surface of the engine cover. In this state, bolts are inserted into the respective bolt holes formed in the flange and then threaded into tapped holes formed in the engine cover and tightened to fix the flange to the engine cover.

It is troublesome to provide the plurality of bolts, and also equally troublesome to thread the respective bolts into the tapped holes so as not to be inclined relative to the respective tapped holes.

An object of the present invention is to provide a chain tensioner which can be easily and smoothly mounted to an engine cover.

### SUMMARY OF THE INVENTION

In order to achieve this object, a chain tensioner is provided comprising the features of claim 1. With this arrangement, it is possible to mount the chain tensioner in position by screwing the external thread on the outer periphery of the cylinder into the internal thread on the inner periphery of the tensioner mounting hole, without using bolts. Since the cylindrical surface on the outer periphery of the cylinder is fitted in the cylindrical surface on the inner periphery of the tensioner mounting hole such that the axis of the cylinder coincides with the axis of the tensioner mounting hole, when the external thread on the outer periphery of the cylinder is screwed into the internal thread on the inner periphery of the tensioner mounting hole, the external thread never inclines relative to the internal thread, thus making it possible to smoothly drive the external thread into the internal thread.

In the arrangement in which the flange has a hexagonal outer periphery, it is possible to tighten the external thread on the outer periphery of the cylinder against the internal thread on the inner periphery of the tensioner mounting hole, by bringing a wrench into engagement with the hexagonal outer periphery of the flange and turning it. For the same purpose, two flat surfaces may be formed on the outer periphery of the flange. Also, a tool engaging groove may be formed in the closed end surface of the cylinder in order to tighten the external thread on the outer periphery of the cylinder against the internal thread on the inner periphery of the tensioner mounting hole, by engaging a tool (such as a flat head screwdriver) in the tool engaging groove and turning it. For the same purpose, a hexagonal hole in which a hexagonal rod wrench may be formed in the closed end surface of the cylinder.

According to the present invention, an annular seal member is disposed between the flange and the engine cover and having a plurality of circumferentially spaced apart straight portions provided along the inner periphery thereof so as to be in contact with the outer periphery of the cylinder with an interference fit. With this arrangement, it is possible to retain the seal member on the outer periphery of the cylinder due to the interference fit of the straight portions. This in turn makes it possible to mount the seal member on the cylinder when manufacturing the chain tensioner, thereby eliminating the necessity to mount the seal member when mounting the chain tensioner to the engine cover. Thus, the chain tensioner can be more easily and smoothly mounted to the engine cover. Moreover, when the chain tensioner is dismounted from the engine cover, the seal member never separates from the chain tension and thus is never lost, and when the chain tensioner is remounted to the engine cover, the operator never forgets to mount the seal member on the tensioner. Also, because the interference fit exists only between the straight portions and the cylinder, the seal member can be fitted on the outer periphery of the cylinder with a smaller force than when the interference fit exists between the entire inner periphery of the seal member and the cylinder.

Similarly, according to an alternative embodiment, the annular seal member is a seal washer comprising a metallic core, and a rubber lip baked to the metallic core and fitted on the outer periphery of the cylinder with an interference fit. With this arrangement too, before the tensioner is mounted to the engine cover, it is possible to prevent separation of the chain tensioner from the seal member, and thus to easily and smoothly mount the chain tensioner to the engine cover.

Preferably, a circumferential groove is formed in the outer periphery of the cylinder at its portion disposed in the tensioner mounting hole, with the inlet of the oil supply passage open to this circumferential groove. With this arrangement, even if the circumferential position of the cylinder is displaced relative to the tensioner mounting hole, it is possible to reliably introduce hydraulic oil into the oil supply passage.

For the same purpose, a large-diameter portion may be formed on the outer periphery of the cylinder so as to radially face the cylindrical surface on the outer periphery of the cylinder, thereby defining an annular gap between the large-diameter portion and the outer periphery of the cylinder, with the inlet of the oil supply passage open to this annular gap. With this arrangement too, even if the circumferential position of the cylinder is displaced relative to the tensioner mounting hole, it is possible to reliably introduce hydraulic oil into the oil supply passage.

An identification mark may be provided on the closed end surface of the cylinder that indicates the position of the oil supply passage. With this arrangement, it is possible to screw the external thread on the outer periphery of the cylinder into the internal thread on the inner periphery of the tensioner mounting hole, while checking the position of the oil supply passage.

In one arrangement, a setting groove is formed in the inner periphery of the cylinder, the setting groove being a stepped groove comprising a small-diameter portion and a large-diameter portion located closer to the closed end of the cylinder than is the small-diameter portion, wherein the chain tensioner further comprises a setting ring having circumferentially separate and opposed ends and received in the setting groove in a radially compressed state, wherein an engaging groove is formed in the outer periphery of the plunger, the setting ring being engageable at its radially inner portion in the engaging groove while being engaged in the small-diameter portion of the setting groove, thereby keeping the plunger pushed into the cylinder. With this arrangement, by further pushing the plunger into the cylinder, the setting ring moves into the large-diameter portion of the setting groove while radially expanding and disengages from the engaging groove.

It is conceivable to form the external thread on the outer periphery of the cylinder so as to radially overlap the leakage gap. But in this arrangement, when the external thread on the outer periphery of the cylinder is tightened, due to the tensile stress produced between the external thread and the flange, the cylinder tends to be deformed, thus changing the size of the leakage gap. Thus, according to the tightening torque applied to the external thread, the dampening force tends to change. Especially if the cylinder is made of aluminum, the dampening force tends to change markedly.

Thus, preferably, the external thread on the outer periphery of the cylinder is formed at its portion nearer to the closed end of the cylinder than is the portion of the cylinder where the plunger slides so as not to radially overlap the leakage gap. With this arrangement, the tensile stress produced between the external thread and the flange when the external thread is tightened is less likely to act on the portion of the cylinder where the plunger slides. Thus, the inner diameter of the cylinder is less likely to change, which in turn makes it possible to accurately control the size of the leakage gap. Thus, it is possible to stably control the dampening force independently of the tightening torque of the external thread.

The cylinder may be made of aluminum. The radial dimension of the leakage gap is the difference in radius between the sliding surfaces of the plunger and the cylinder, and this value may be 0.015 to 0.080 mm.

An O-ring may be provided for closing a gap between the inner periphery of the tensioner mounting hole and the outer periphery of the cylinder at a position closer to the open end of the cylinder than is the inlet of the oil supply passage. With this arrangement, it is possible to prevent hydraulic oil from leaking into the interior of the engine cover through the gap between the tensioner mounting hole and the cylinder. The O-ring may be received in a ring groove formed in the outer periphery of the cylinder, or in a ring groove formed in the inner periphery of the tensioner mounting hole.

Because the chain tensioner according to the present invention can be mounted to the engine cover by screwing the external thread on the outer periphery of the cylinder into the internal thread on the inner periphery of the tensioner mounting hole, no bolts are necessary to mount the tensioner to the engine cover. Thus the tensioner can be easily and smoothly mounted to the engine cover. Also, since the cylindrical surface on the outer periphery of the cylinder is fitted around the cylindrical surface on the inner periphery of the tensioner mounting hole such that the axis of the cylinder coincides with the axis of the tensioner mounting hole, when the external thread on the outer periphery of the cylinder is screwed into the internal thread on the inner periphery of the tensioner mounting hole, the external thread is never inclined relative to the internal thread, so that the external thread can be smoothly screwed into the internal thread.

### BRIEF DESCRIPTION OF THE DRAWINGS

Fig. 1 is a front view of a chain transmission device including a chain tensioner according to a first embodiment of the present invention;

Fig. 2 is an enlarged sectional view of the chain tensioner of Fig. 1 and its vicinity;

Fig. 3 is an enlarged sectional view of the chain tensioner of Fig. 2 when it is dismounted from the engine cover;

Fig. 4 is a sectional view taken along line IV-IV of Fig. 3;

Fig. 5 shows a modified example of the seal member shown in Fig. 3;

Fig. 6 is a side view of the chain tensioner of Fig. 3;

Fig. 7 shows a modified example of the flange shown in Fig. 6;

Fig. 8A is a side view of another modified example of the flange shown in Fig. 6;

Fig. 8B is a front view of Fig. 8A;

Fig. 9A is a side view of still another modified example of the flange shown in Fig. 6;

Fig. 9B is a front view of Fig. 9A;

Fig. 10 shows a modified example of the tensioner mounting hole shown in Fig. 2;

Fig. 11 is an enlarged sectional view of a chain tensioner according to a second embodiment of the present invention;

Fig. 12 is a front view of a modified example of the cylinder shown in Fig. 3 in which a recessed groove is formed in the outer periphery thereof;

Fig. 13 is a front view of a modified example of the cylinder shown in Fig. 5 in which a recessed groove is formed in the outer periphery thereof; and

Fig. 14 shows a comparative example in which the external thread on the outer periphery of the cylinder of Fig. 2 is formed so as to radially overlap the leakage gap.

### DETAILED DESCRIPTION OF THE PREFERRED EMBODIMENTS

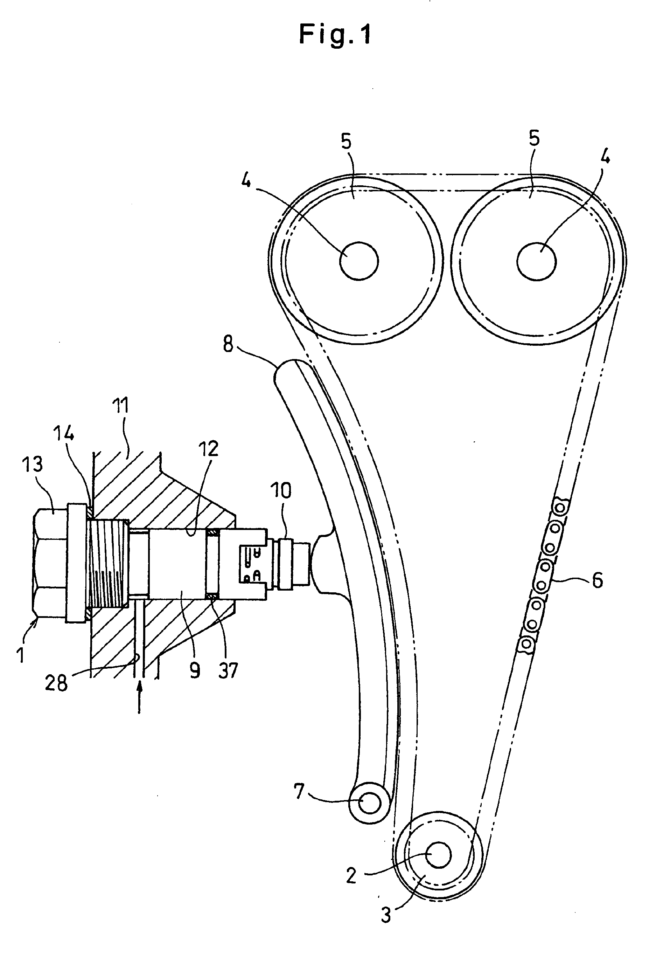

Fig. 1 shows a chain transmission device including a chain tensioner 1 according to the first embodiment of the present invention. The chain transmission device comprises a sprocket 3 fixed to an engine crankshaft 2, sprockets 3 fixed to respective camshafts 4, and a chain 6 through which the sprockets 2 and 3 are coupled together so that the rotation of the crankshaft 2 is transmitted to the camshafts 4, thereby rotating the camshafts 4 and opening and closing valves (not shown) of combustion chambers.

A chain guide 8 which is pivotable about a pivot shaft 7 is in contact with the chain 6. The chain tensioner presses the chain 6 through the chain guide 8.

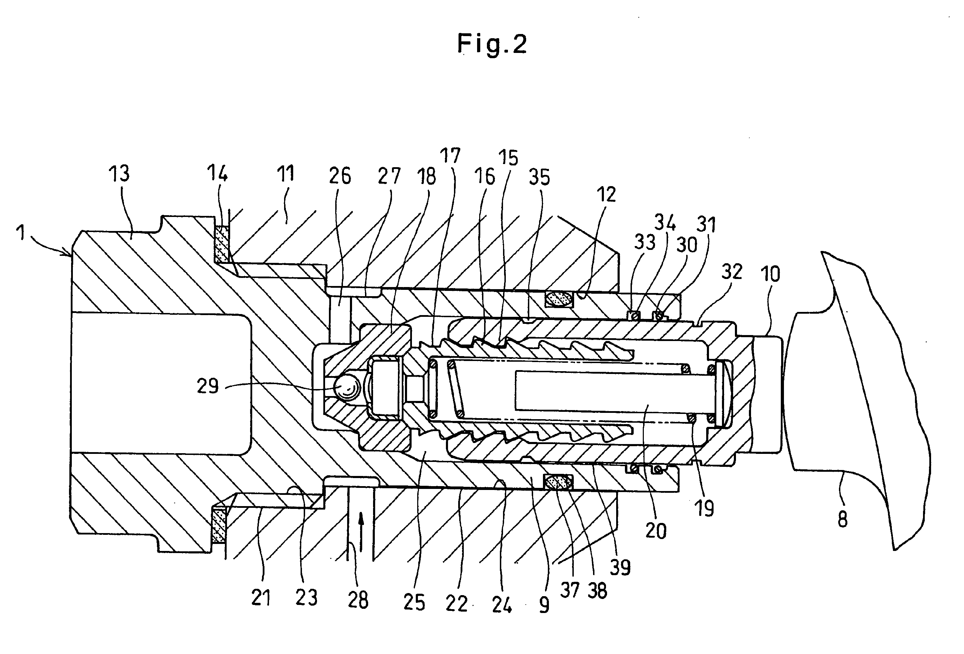

As shown in Fig. 2, the chain tensioner 1 includes a cylindrical cylinder 9 having an open end and a closed end, and a plunger 10 axially slidably inserted in the cylinder 9. The cylinder 9 is inserted in a tensioner mounting hole 12 formed in the engine cover 11 with its open end located inside the engine cover 11. A flange 13 is integrally formed on the outer periphery of the cylinder 9 at its closed end. The flange 13 is supported on the outer surface of the engine cover 11 with an annular seal member 14 disposed between the flange 13 and the engine cover 11.

The plunger 10 is cylindrical member having a closed end and an open end, and is inserted in the cylinder 9 with its open end located in the cylinder 9. The plunger 10 has an internal thread 15 formed on the inner periphery thereof. A screw rod 17 having an external thread 16 on its outer periphery is mounted in the plunger 10 with the external thread 16 in threaded engagement with the internal thread 15. The screw rod 17 has its one end protruding from the plunger 10 and in abutment with a rod seat 18 provided in the cylinder 9.

A return spring 19 is mounted between the plunger 10 and the screw rod 17. The return spring 19 has one end thereof supported on the screw rod 17, and its other end pressed against the plunger 10 through a spring seat 20, thereby biasing the plunger 10 out of the cylinder 9. Thus, with its end protruding from the cylinder 9 in abutment with the chain guide 8, the plunger 10 presses the chain 6 through the chain guide 8.

The external thread 16 and the internal thread 15 both comprise a pressure flank for receiving pressure when a load is applied to the plunger 10 that tends to push the plunger 10 into the cylinder 9, and a clearance flank having a smaller flank angle than the pressure flank, and have a serration-shaped cross-section.

On the portion of the outer periphery of the cylinder 9 that is inserted in the tensioner mounting hole 12, an external thread 21 and a cylindrical surface 22 are formed with the cylindrical surface 22 located closer to the open end of the cylinder 9 than is the external thread 21. The cylindrical surface 22 has a smaller diameter than the external thread 21. On the inner periphery of the tensioner mounting hole 12, an internal thread 21 and a cylindrical surface 24 are formed with the internal thread 21 extending inwardly from the outer surface of the engine cover 11 and the cylindrical surface 24 extending between the internal thread 23 and the inner surface of the engine cover 11. The internal thread 23 is in threaded engagement with the external thread 21 on the outer periphery of the cylinder 9, while the cylindrical surface 24 is fitted on the cylindrical surface on the outer periphery of the plunger 9.

An oil supply passage 26 is formed in the cylinder 9 for introducing hydraulic oil into a pressure chamber 25 defined by the cylinder 9 and the plunger 10. The oil supply passage 26 extends radially through the cylinder 9 with its inlet open to a circumferential groove 27 formed in the portion of the outer periphery of the cylinder 9 inserted in the tensioner mounting hole 12.

The circumferential groove 27 communicates with an oil hole 28 formed in the engine cover 11. Hydraulic from an oil pump (not shown) is introduced through the oil hole 28, circumferential groove 27 and oil supply passage 26 into the pressure chamber 25. At the outlet of the oil supply passage 26, a check valve 29 is provided which prevents backflow of hydraulic oil in the pressure chamber 25 into the oil supply passage 26.

The cylinder 9 has in its inner periphery a stepped setting groove 30 comprising a small-diameter portion near the open end of the cylinder 9 and a larger-diameter portion near the closed end of the cylinder 9. A setting ring 31 is received in the setting groove 30. The setting ring 31 has circumferentially separated ends, and is received in the groove 30 in an elastically radially compressed state.

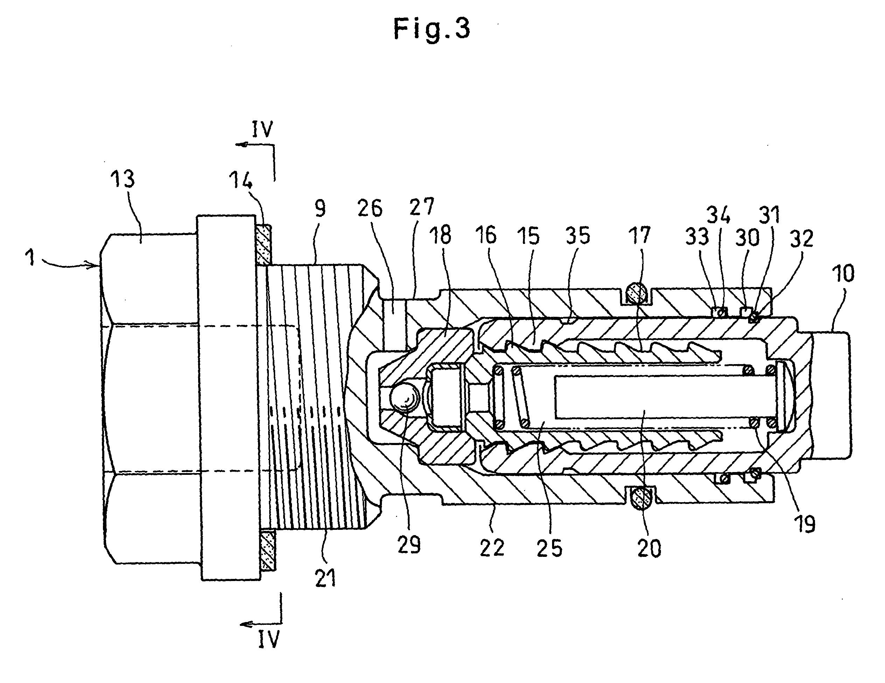

As shown in Fig. 3, an engaging groove 32 is formed in the outer periphery of the plunger 10 which is configured to be radially aligned with the setting groove 32 when the plunger 10 is pushed into the cylinder 9. With the setting ring 31 received in the small-diameter portion of the setting groove 32, which is located near the open end of the cylinder 9, its radially inner portion is engaged in the engaging groove 32, thereby keeping the plunger 10 pushed into the cylinder 9 (this position is hereinafter referred to as the "initial set position"). When the plunger 10 is further pushed into the cylinder from the initial set position, the setting ring 31 moves from the small-diameter portion of the setting groove 30 into its large-diameter portion, and radially expands therein, thereby disengaging from the engaging groove 32.

A ring receiving groove 33 is formed in the inner periphery of the cylinder 9 at a position nearer to the closed end of the cylinder 9 than is the setting groove 30. A stopper ring 34 is received in the ring receiving groove 33 and elastically pressed against the outer periphery of the plunger 10. A stopper groove 35 is formed in the outer periphery of the plunger 10 at a position nearer to the end of the plunger 10 located inside the cylinder 9 than is the engaging groove 32. When the plunger 10 protrudes excessively from the cylinder 9, the stopper ring 34 is engaged in the stopper groove 35, thereby preventing separation of the plunger 10 from the cylinder 9.

As shown in Fig. 2, the seal member 14 seals between the flange 13 and the engine cover 11, thereby preventing hydraulic oil flowing through the oil hole 28 into the oil supply passage 26 from leaking through between the cylinder 9 and the tensioner mounting hole 12 to outside the engine cover 11.

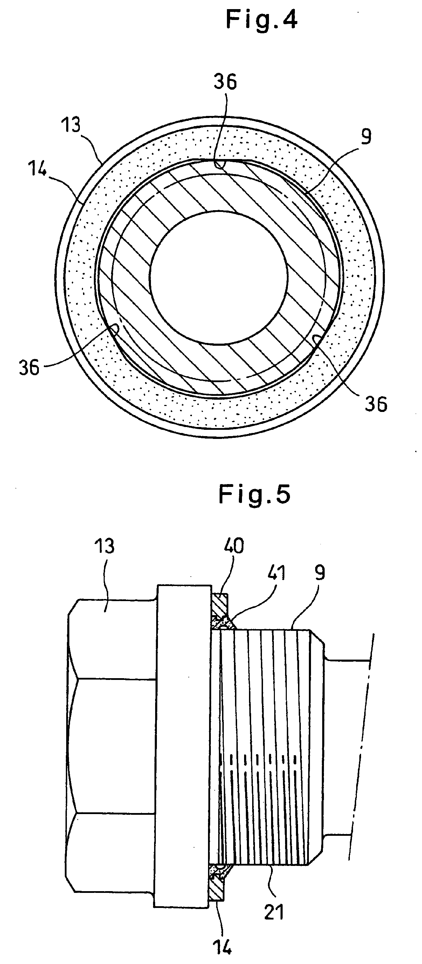

As shown in Fig. 4, the radially inner periphery of the seal member 14 has three circumferentially spaced apart flat straight portions extending perpendicular to the radial direction, and fitted on the outer periphery of the cylinder 9 with an interference fit. Thus, even with the chain tensioner 1 dismounted from the engine cover 11, the seal member 14 remains fitted on the outer periphery of the cylinder 9 due to the interference fit of the straight portions 36. The seal member 14 may be a gasket made of a copper alloy or an aluminum alloy.

The cylinder 9 is made by die-casting an aluminum alloy together with the flange 13. The surface of the flange 13 in contact with the seal member 14 has a surface roughness Rmax value of not more than 12.5 to ensure close contact between the flange 13 and the seal member 14 over a long period of time.

As shown in Fig. 2, an O-ring 37 is fitted in a ring groove 38 formed in the outer periphery of the cylinder 9 to seal the gap between the inner periphery of the tensioner mounting hole 12 and the outer periphery of the cylinder 9 at a portion nearer to the open end of the cylinder 9 than is the inlet of the oil supply passage 26, thereby preventing hydraulic oil flowing through the oil hole 28 into the oil supply passage 26 from leaking into the interior of the engine cover 11.

An annular leakage gap 39 is defined between the sliding surfaces of the plunger 10 and the cylinder 9 through which hydraulic oil in the pressure chamber 25 can flow out. The size of the leakage 39 corresponds to the difference in radius between the sliding surfaces of the plunger 10 and the cylinder 9, and is set to a value in the range of 0.015 to 0.080 mm.

The external thread 21 on the outer periphery of the cylinder 9 is provided nearer to the portion of the inner periphery of the cylinder 9 along which the plunger 10 slides. In other words, the external thread 21 on the outer periphery of the cylinder 9 does not radially overlap with the leakage gap 39.

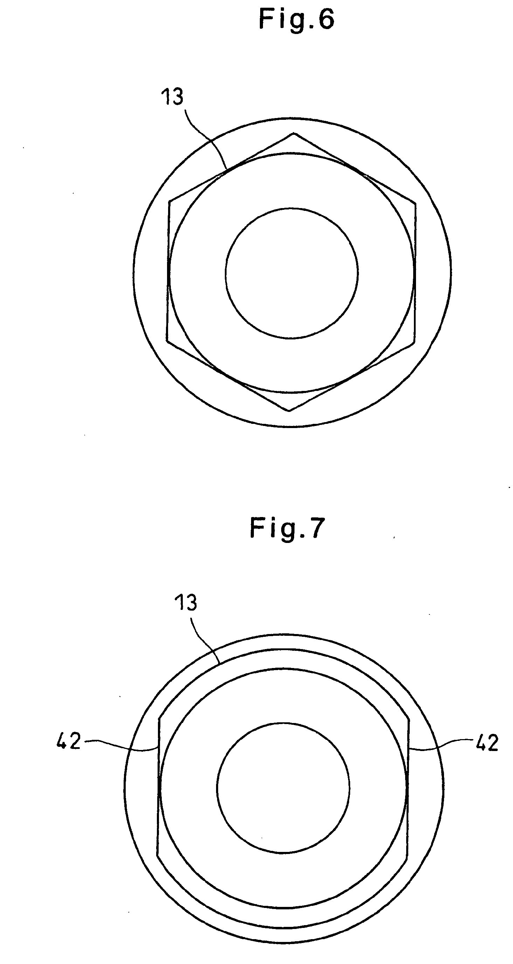

As shown in Fig. 6, the outer periphery of the flange 13 is hexagonal as viewed from the axial direction so that the external thread 21 can be tightened by bringing a wrench (such as a spanner or a box wrench) into engagement with the outer periphery of the flange 13.

For example, this chain tensioner 1 is mounted on the engine cover 11 as follows:

First as shown in Fig. 3, the plunger 10 is set in the initial set position. Then, the cylinder 9 is inserted into the tensioner mounting hole 12 of the engine cover 11 until the outer cylindrical surface 22 of the cylinder is fitted in the inner cylindrical surface 24 of the tensioner mounting hole 12 so that the axis of the cylinder 9 coincides with the axis of the tensioner mounting hole 12.

Then, the external thread 21 on the outer periphery of the cylinder 9 is brought into threaded engagement with the internal thread 23 on the inner periphery of the tensioner mounting hole 12. The threads 21 and 23 are tightened by e.g. bringing a wrench into engagement with the outer periphery of the flange 13 and turning the wrench. When the external thread 21 is completely screwed into the internal thread 23, the plunger 10 is pushed into the cylinder 9 under the reaction force from the chain guide 8, so that, as shown in Fig. 2, the setting ring 31 is moved from the small-diameter portion of the setting groove 30, which is located nearer to the open end of the cylinder 9 than is the large-diameter portion, into the large-diameter portion. The initial set position of the chain tensioner 1 is thus reset.

Now the operation of the chain tensioner 1 is described.

When the tension of the chain decreases while the engine is running, the plunger 10 moves outwardly of the cylinder under the biasing force of the return spring 19, thus removing slackness of the chain 6. When the plunger 10 moves in this direction, the check valve 29 opens, thereby allowing hydraulic oil to flow into the pressure chamber 25 through the oil supply passage 26. This allows smooth and quick movement of the plunger 10.

When the tension of the chain 6 increases while the engine is running, the plunger 10 is pushed into the cylinder under the tension of the chain 6, thereby reducing the tension of the chain 6. When the plunger 10 is pushed into the cylinder, hydraulic oil in the pressure chamber 25 leaks through the leakage gap 39 between the sliding surfaces of the plunger 10 and the cylinder 9. At this time, under the dampening force produced due to the viscous resistance of the hydraulic oil flowing through the leakage gap 39, the plunger 10 is pushed in slowly. Also in this state, due to vibration of the chain 6, the screw rod 17 rotates relative to the plunger 10 while repeatedly moving back and forth within the range of the gap between the internal thread 15 and the external thread 16.

When the engine stops, the tension of the chain 6 may remain high according to the stopped positions of the camshafts 4. In this case, because the chain 6 is not vibrating, the internal thread 15 of the plunger 10 is supported by the external thread 16 of the screw rod 17, so that the position of the plunger 10 is fixed while the engine is at a stop. Thus, when the engine is restarted, the chain 6 is less likely to slacken, allowing smooth startup of the engine.

Because this chain tensioner 1 can be mounted to the engine cover 11 by bringing the external thread 21 on the outer periphery of the cylinder 9 into threaded engagement with the internal thread 23 on the inner periphery of the tensioner mounting hole 12, no bolts are necessary to mount the chain tensioner to the engine cover. Thus, the chain tensioner 1 can be easily and smoothly mounted to the engine cover 11.

Also, when the chain tensioner 1 is mounted to the engine cover 11, because the outer cylindrical surface 22 is of the cylinder 9 is fitted in the inner cylindrical surface 24 of the tensioner mounting hole 12 so that the axis of the cylinder 9 coincides with the axis of the tensioner mounting hole 12, when the external thread 21 on the outer periphery of the cylinder 9 is screwed into the internal thread 23 on the inner periphery of the tensioner mounting hole 12, the external thread 21 never inclines relative to the internal thread 23. Thus, the external thread 21 can be smoothly screwed into the internal thread 23.

Since the seal member 14 is retained on the outer periphery of the cylinder 9 with an interference fit between its straight portions 36 and the outer periphery of the cylinder 9, the seal member 14 can be fitted on the cylinder 9 when the chain tensioner 1 is manufactured. This in turn eliminates the necessity to mount the seal member 14 when the chain tensioner 1 is mounted to the engine cover 11, thus making it easier and smoother to mount the chain tensioner 1 to the engine cover 11. Also, when the chain tensioner 1 is dismounted from the engine cover 11, the seal member 14 never separates from the tensioner 1, and thus is never lost. Also, when the chain tensioner 1 is re-mounted to the engine cover 11, because the seal member 14 remains fitted on the cylinder 11, an operator cannot forget to fit the seal member 14.

Because the seal member 14 is fitted with an interference fit only between its straight portions 36 provided along the inner periphery of the seal member and the outer periphery of the cylinder 9, the seal member 14 can be fitted on the outer periphery of the cylinder 9 with a smaller force than when the seal member 14 is fitted on the cylinder 9 with an interference fit over the entire inner periphery of the seal member 14.

In this chain tensioner 1, even if the cylinder 9 is mounted in the tensioner mounting hole 12 such that the oil hole 28 is circumferentially offset from the oil supply passage 26, the oil hole 28 and the oil supply passage 26 still remain in communication with each other through the circumferential groove 27, thus ensuring that hydraulic oil can be introduced into the oil supply passage 26.

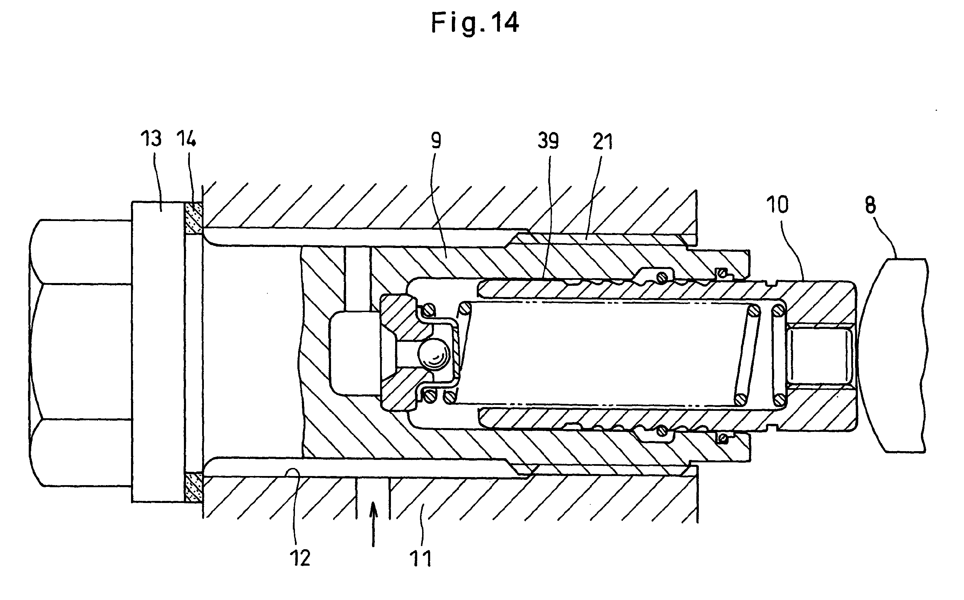

As shown in Fig. 14, it is conceivable to form the external thread 21 on the outer periphery of the cylinder 9 so as to radially overlap the leakage gap 39. But in this arrangement, when the external thread 21 on the outer periphery of the cylinder 9 is tightened, due to the tensile stress produced between the external thread 21 and the flange 13, the cylinder 9 tends to be deformed, thus changing the size of the leakage gap 39. Thus, according to the tightening torque applied to the external thread 21, the dampening force tends to change. Especially if the cylinder 9 is made of aluminum, the dampening force tends to change markedly.

In contrast, by forming the external thread 21 on the outer periphery of the cylinder 9 at its portion nearer to the closed end of the cylinder than is the portion of the cylinder 9 where the plunger 10 slides, as shown e.g. in Figs. 2 and 3, the tensile stress produced between the external thread 21 and the flange 13 when the external thread 21 is tightened is less likely to act on the portion of the cylinder 9 where the plunger 10 slides. Thus, the inner diameter of the cylinder 9 is less likely to change, which in turn makes it possible to accurately control the size of the leakage gap 39. Thus, it is possible to stably control the dampening force independently of the tightening torque of the external thread 21.

Because the oil supply passage 26 of this chain tensioner 1 has its inlet open to the outer periphery of the cylinder 9 at its portion located nearer to the open end of the cylinder 9 than is the external thread 21 on the outer periphery of the cylinder 9, the threadedly engaged portions of the external thread 21 and the internal thread 23 serve as a seal, thus further reducing the possibility of leakage of hydraulic oil to the outside of the engine cover 11.

In this embodiment, the O-ring 37 is fitted in the ring groove 38 formed in the outer periphery of the cylinder 9, the O-ring 37 may be fitted in a ring groove (not shown) formed in the inner periphery of the tensioner mounting hole 12.

Instead of the three equiangularly spaced straight portions 36, only two circumferentially spaced straight portions may be provided along the inner periphery of the seal member 14. But in order to more easily and reliably make the center of the seal member 14 coincide with the axis of the cylinder 9, it is preferable to provide three of more equiangularly spaced straight portions.

As shown in Fig. 5, the seal member 14 disposed between the flange 13 and the engine cover 11 may be a seal washer comprising an annular metallic core 40 and a rubber lip 41 baked to the inner periphery of the core 40 and fitted on the outer periphery of the cylinder 9 with an interference fit. In this arrangement, too, the seal member 14 can be retained on the outer periphery of the cylinder 9 due to the interference fit between the rubber lip 41 and the outer periphery of the cylinder 9. The rubber lip 41 may be made of a rubber compound comprising a rubber material and inorganic filler.

As shown in Fig. 7, two flat surfaces 42 may be formed on the outer periphery of the flange 13. With this arrangement too, by engaging a wrench with the flat surfaces 42 and turning the wrench, it is possible to tighten the external thread 21 on the outer periphery of the cylinder 9 against the internal thread 23 on the inner periphery of the tensioner mounting hole 12. The two flat surfaces 42 are formed by cutting out the outer periphery of the flange 13 along two planes that are parallel to a plane containing the axis of the cylinder 9.

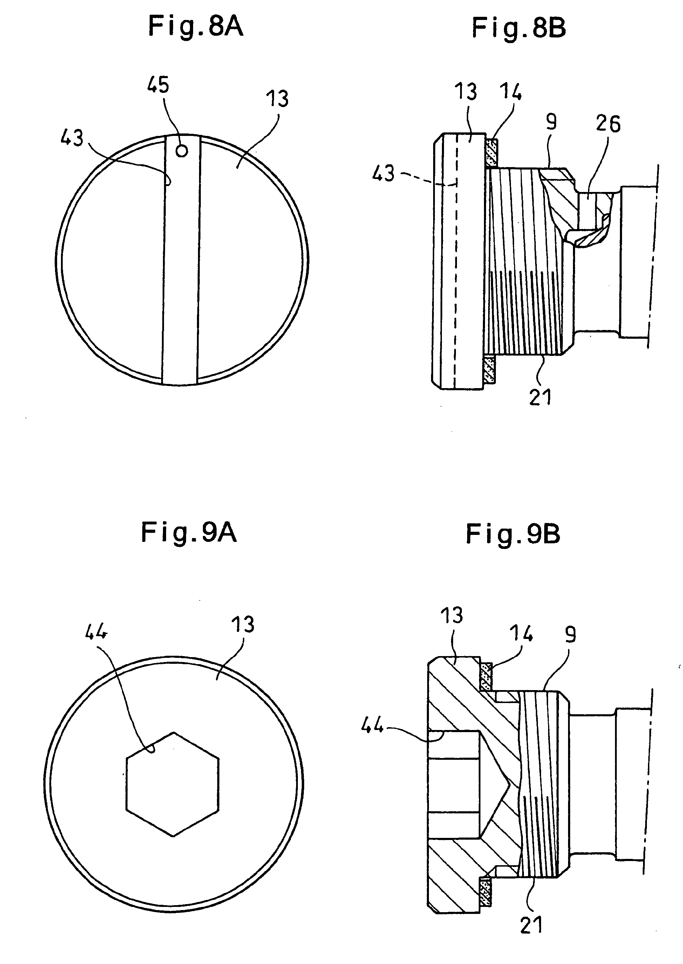

Also, as shown in Figs. 8A and 8B, a tool engaging groove 43 may be formed in the closed end surface of the cylinder 9. With this arrangement too, by turning a tool (such as a flat head screwdriver) engaged in the tool engaging groove 43, it is possible to tighten the external thread 21 on the outer periphery of the cylinder 9 against the internal thread 23 on the inner periphery of the tensioner mounting hole 12. Further alternatively, as shown in Figs. 9A and 9B, a hexagonal hole 44 may be formed in the closed end surface of the cylinder in which a hex rod wrench is engageable.

As shown in Fig. 8A, an identification mark 45 that indicates the circumferential position of the oil supply passage 26 may be provided on the closed end surface of the cylinder 9. With this arrangement, the external thread 21 on the outer periphery of the cylinder 9 can be screwed into the internal thread 23 on the inner periphery of the tensioner mounting hole 12, while checking the circumferential position of the oil supply passage 26.

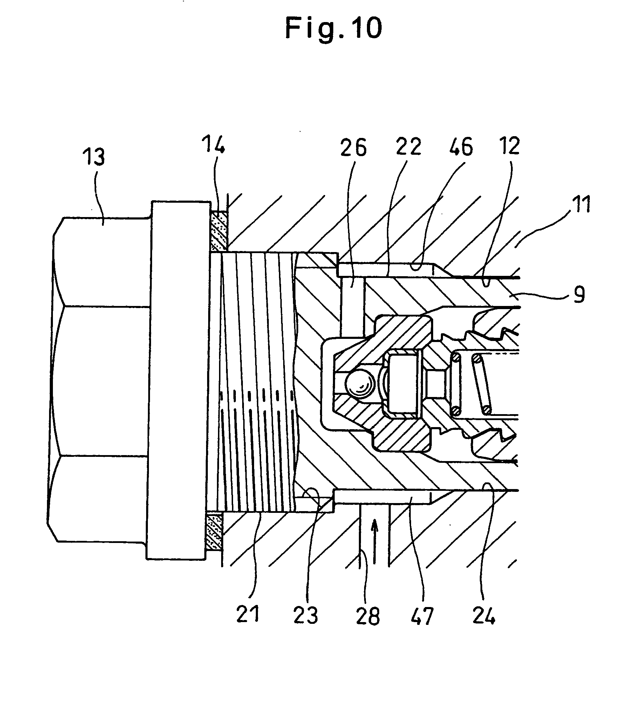

As shown in Fig. 10, a large-diameter portion 46 may be formed on the inner periphery of the tensioner mounting hole 12 so as to be radially spaced from and opposed to the outer periphery of the cylinder 9 to define an annular gap 47 between the large-diameter portion 46 and the outer periphery of the cylinder 9, with the oil supply passage 26 having its inlet open to the annular gap 47. With this arrangement too, even if the cylinder 9 is mounted in the tensioner mounting hole 12 such that the oil hole 28 is circumferentially offset from the oil supply passage 26, the oil hole 28 and the oil supply passage 26 still remain in communication with each other through the annular gap 47, thus ensuring that hydraulic oil can be introduced into the oil supply passage 26.

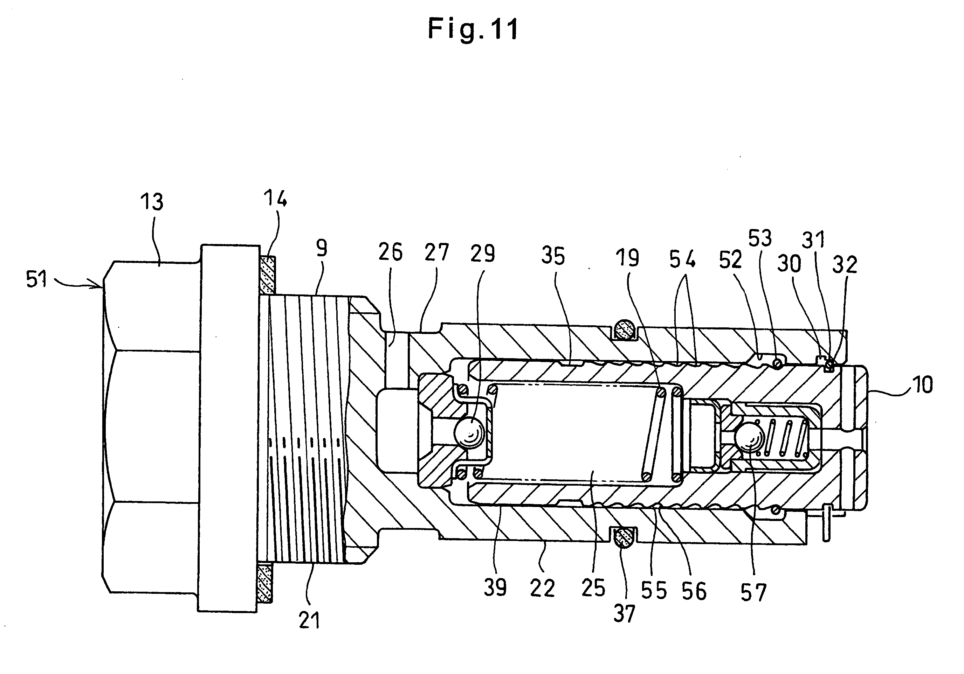

Fig. 11 shows the chain tensioner according to the second embodiment of the present invention. Elements corresponding to those of the first embodiment are denoted by identical numerals and their description is omitted.

An annular ring receiving groove 52 is formed in the inner periphery of the cylinder 9 in which a register ring 53 is axially movably received. The register ring 53 is an elastically radially deformable ring having circumferentially separated opposed ends. The register ring 53 is elastically pressed against the outer periphery of the plunger 10, and is engageable in any of a plurality of circumferential grooves 54 formed in the outer periphery of the plunger 10 so as to be axially spaced apart from each other.

Each circumferential groove 54 comprises a tapered surface 55 along which the register ring 53 is movable while radially expanding, thereby allowing the plunger 10 to protrude from the cylinder when a load is applied to the plunger 10 that tends to push the plunger 10 out of the cylinder, and a stopper surface 56 which engages the register ring 53 when the plunger 10 is pushed into the cylinder under the increasing tension of the chain 6, thereby preventing further retraction of the plunger 10.

A relief valve 57 that opens if the pressure in the pressure chamber 25 exceeds a predetermined pressure level is mounted in the plunger 10 near its end protruding from the cylinder 9. Thus, if the tension of the chain 6 increases sharply and suddenly, the relief valve 57 opens, thus releasing hydraulic oil in the pressure chamber 25, and reducing the tension of the chain 6.

As with the first embodiment, this chain tensioner 51, too, can be mounted to the engine cover 11 by screwing the external thread 21 on the outer periphery of the cylinder 9 into the internal thread 23 on the inner periphery of the tensioner mounting hole 12, without the need for bolts. Thus, this chain tensioner 51 can also be mounted easily and smoothly to the engine cover 11, and has all the other advantages of the chain tensioner according to the first embodiment.

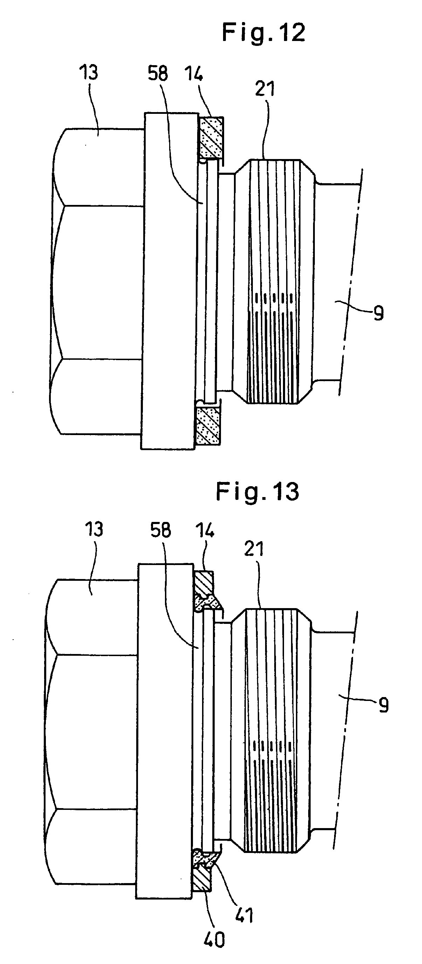

In either of the embodiments, as shown in Figs. 12 and 13, an annular recessed groove 58 may be formed in the outer periphery of the cylinder 9 at the root portion of the flange 13 radially facing the seal member 14. The recessed groove 58 minimizes interference of the seal member 14 with the root portion of the flange 13 radially facing the seal member 14, thereby allowing closer contact of the seal member 14 with the flange 13. The recessed groove 58 has a width smaller than the thickness of the seal member 14.

## Claims

1. A chain tensioner comprising
a cylindrical cylinder (9) having an open end and a closed end, and inserted in a tensioner mounting hole (12) formed in an engine cover (11) with the open end located inside the engine cover (11), said cylinder (9) having a flange (13) formed on the outer periphery thereof and supported on the outer surface of the engine cover (11), a plunger (19) axially slidably mounted in the cylinder (9), said cylinder (9) being formed with an oil supply passage (26) through which hydraulic oil supplied into an oil hole (28) open to the inner periphery of the tensioner mounting hole (12) is introduced into a pressure chamber (25) defined by the cylinder (9) and the plunger (10), a check valve (29) provided at the oil supply passage (26) for preventing backflow of hydraulic oil,
a return spring (19) biasing the plunger (10) in a direction to protrude from the cylinder (9), and,
an annular seal member (14) disposed between the flange (13) and the engine cover (11), wherein
a leakage gap (39) is defined between sliding surfaces of the plunger (10) and the cylinder (9) for which hydraulic oil in the pressure chamber (25) can leak,
an external thread (21) and a cylindrical surface (22) are formed on the outer periphery of the cylinder, with the cylindrical surface (22) located closer to the open end of the cylinder (9) than is the external thread (21), and
an internal thread (23) and a cylindrical surface (24) are formed on the inner periphery of the tensioner mounting hole (12), with the internal thread (23) in threaded engagement with the external thread (21) and the cylindrical surface (24) on the inner periphery of the tensioner mounting hole (12) fitted around the cylindrical surface (22) on the outer periphery of the cylinder (9),
**characterized in that**
the annular seal member (14) either having a plurality of circumferentially spaced apart straight portions (36) along the inner periphery thereof which are in contact with the outer periphery of the cylinder (9) with an interference fit, or being a seal washer comprising a metallic core (40), and a rubber lip (41) baked to the metallic core (40) and fitted on the outer periphery of the cylinder (9) with an interference fit.

2. The chain tensioner of claim 1 wherein the flange (13) has a hexagonal outer periphery.

3. The chain tensioner of claim 1 wherein two flat surfaces (42) are formed on the outer periphery of the flange (13).

4. The chain tensioner of claim 1 wherein a tool engaging groove (43) is formed in the closed end surface of the cylinder (9).

5. The chain tensioner of claim 1 wherein a hexagonal hole (44) is formed in the closed end surface of the cylinder (9).

6. The chain tensioner of any of claims 1 to 5, wherein a circumferential groove (27) is formed in the outer periphery of the cylinder (9) at its portion disposed in the tensioner mounting hole (12), and wherein the oil supply passage (28) has its inlet open to the circumferential groove (27).

7. The chain tensioner of any of claims 1 to 6, wherein a large-diameter portion (46) is formed on the outer periphery of the cylinder (16) so as to radially face the cylindrical surface (22) on the outer periphery of the cylinder (9), thereby defining an annular gap (47) between the large-diameter portion (46) and the outer periphery of the cylinder (9), and wherein said oil supply passage (26) has its inlet open to the annular gap (47).

8. The chain tensioner of any of claims 1 to 7, wherein an identification mark (45) is provided on the closed end surface of the cylinder (9) that indicates the position of the oil supply passage (26).

9. The chain tensioner of any of claims 1 to 8, wherein a setting groove (30) is formed in the inner periphery of the cylinder (9), said setting groove (30) being a stepped groove comprising a small-diameter portion and a large-diameter portion located closer to the closed end of the cylinder (9) than is the small-diameter portion, wherein the chain tensioner further comprises a setting ring (31) having circumferentially separate and opposed ends and received in the setting groove (30) in a radially compressed state, wherein an engaging groove (32) is formed in the outer periphery of the plunger (10), said setting ring (31) being engageable at its radially inner portion in said engaging groove (32) while being engaged in the small-diameter portion of said setting groove (30), thereby keeping the plunger (10) pushed into the cylinder (9), whereby by further pushing the plunger (10) into the cylinder (9), the setting ring (31) moves into the large-diameter portion of the setting groove (30) while radially expanding and disengages from the engaging groove (32).

10. The chain tensioner of any of claims 1 to 9, wherein the external thread (21) on the outer periphery of the cylinder (9) is located closer to the closed end of the cylinder (9) than is the portion of the cylinder (9) along which the plunger (10) slides, whereby the external thread (21) on the outer periphery of the cylinder (9) does not radially overlap the leakage gap (39).

11. The chain tensioner of claim 10, wherein the cylinder (9) is made of aluminum.

12. The chain tensioner of claim 10 or 11, wherein the radial dimension of the leakage gap (39) is the difference in radius between the sliding surfaces of the plunger (10) and the cylinder (9) which is 0.015 to 0.080 mm.

13. The chain tensioner of any of claims 1 to 12 further comprising an O-ring (37) for closing a gap between the inner periphery of the tensioner mounting hole (12) and the outer periphery of the cylinder (9) at a position closer to the open end of the cylinder (9) than is the inlet of the oil supply passage (26).

## Patentansprüche

1. Kettenspannvorrichtung, die umfasst:
einen zylindrischen Zylinder (9), der ein offenes Ende und ein geschlossenes Ende hat und in ein Anbringungsloch (12) für die Spannvorrichtung eingeführt ist, das in einer Motorabdeckung (11) ausgebildet ist, wobei sich das offene Ende im Inneren der Motorabdeckung (11) befindet, und der Zylinder (9) einen Flansch (13) hat, der an seinem Außenumfang ausgebildet ist und von der Außenfläche der Motorabdeckung (11) getragen wird,
einen Kolben (19), der axial verschiebbar in dem Zylinder (9) angebracht ist, wobei der Zylinder (9) mit einem Ölzuführkanal (26) versehen ist, über den Hydrauliköl, das einem Ölloch (28) zugeführt wird, das zum Innenumfang des Anbringungslochs (12) für die Spannvorrichtung hin offen ist, in eine Druckkammer (25) eingeleitet wird, die durch den Zylinder (9) und den Kolben (10) gebildet wird,
ein Rückschlagventil (29), das an dem Ölzuführkanal (26) vorhanden ist, um Rückstrom von Hydrauliköl zu verhindern,
eine Rückstellfeder (19), die den Kolben (10) in einer aus dem Zylinder (9) vorstehenden Richtung spannt, und
ein ringförmiges Dichtungselement (14), das zwischen dem Flansch (13) und der Motorabdeckung (11) angeordnet ist, wobei
ein Austrittsspalt (39) zwischen Gleitflächen des Kolbens (10) und des Zylinders (9) ausgebildet ist, über den Hydrauliköl in der Druckkammer (25) austreten kann,
ein Außengewinde (21) und eine zylindrische Fläche (22) am Außenumfang des Zylinders ausgebildet sind, wobei sich die zylindrische Fläche (22) näher an dem offenen Ende des Zylinders (9) befindet als das Außengewinde (21), und
ein Innengewinde (23) und eine zylindrische Fläche (24) am Innenumfang des Anbringungslochs (12) für die Spannvorrichtung ausgebildet sind, wobei das Innengewinde (23) in Gewindeeingriff mit dem Außengewinde (21) ist und die zylindrische Fläche (24) am Innenumfang des Anbringungslochs (12) für die Spannvorrichtung um die zylindrische Fläche (22) am Außenumfang des Zylinders (9) herum gepasst ist,
**dadurch gekennzeichnet, dass**
das ringförmige Dichtungselement (14) entweder eine Vielzahl in Umfangsrichtung beabstandeter gerader Abschnitte (36) an seinem Innenumfang aufweist, die mit einer Presspassung in Kontakt mit dem Außenumfang des Zylinders (9) sind, oder ein Dichtring ist, der einen Metallkern (4) und eine Gummilippe (41) umfasst, die auf den Metallkern (40) gebacken ist und mit einer Presspassung auf den Außenumfang des Zylinders (9) aufgepasst ist.

2. Kettenspannvorrichtung nach Anspruch 1, wobei der Flansch (13) einen sechseckigen Außenumfang hat.

3. Kettenspannvorrichtung nach Anspruch 1, wobei zwei plane Flächen (42) am Außenumfang des Flansches (13) ausgebildet sind.

4. Kettenspannvorrichtung nach Anspruch 1, wobei eine Werkzeugeingriffsnut (43) in der geschlossenen Endfläche des Zylinders (9) ausgebildet ist.

5. Kettenspannvorrichtung nach Anspruch 1, wobei ein sechseckiges Loch (44) in der geschlossenen Endfläche des Zylinders (9) ausgebildet ist.

6. Kettenspannvorrichtung nach einem der Ansprüche 1 bis 5, wobei eine Umfangsnut (27) im Außenumfang des Zylinders (9) an seinem Abschnitt ausgebildet ist, der in dem Anbringungsloch (12) für die Spannvorrichtung angeordnet ist, und der Einlass des Ölzuführkanals (28) zu der Umfangsnut (27) hin offen ist.

7. Kettenspannvorrichtung nach einem der Ansprüche 1 bis 6, wobei ein Abschnitt (46) mit großem Durchmesser am Außenumfang des Zylinders (16) so ausgebildet ist, dass er der zylindrischen Fläche (22) am Außenumfang des Zylinders (9) radial zugewandt ist, so dass ein radialer Spalt (47) zwischen dem Abschnitt (46) mit großem Durchmesser und dem Außenumfang des Zylinders (9) gebildet wird, und der Einlass des Ölzuführkanals (26) zu dem ringförmigen Spalt (47) hin offen ist.

8. Kettenspannvorrichtung nach einem der Ansprüche 1 bis 7, wobei eine Identifizierungsmarkierung (45) an der geschlossenen Endfläche des Zylinders (9) vorhanden ist, die die Position des Ölzuführkanals (26) anzeigt.

9. Kettenspannvorrichtung nach einem der Ansprüche 1 bis 8, wobei eine Einstellnut (30) im Innenumfang des Zylinders (9) ausgebildet ist, die Einstellnut (30) eine abgestufte Nut ist, die einen Abschnitt mit kleinem Durchmesser und einen Abschnitt mit großem Durchmesser umfasst, der sich näher am geschlossenen Ende des Zylinders (9) befindet als der Abschnitt mit kleinem Durchmesser, die Kettenspannvorrichtung des Weiteren einen Einstellring (31) umfasst, der in Umfangsrichtung getrennte und einander gegenüberliegende Enden aufweist und in der Einstellnut (30) in einem radial zusammengedrückten Zustand aufgenommen ist, eine Eingriffsnut (32) in dem Außenumfang des Kolbens (10) ausgebildet ist, der Einstellring (31) an seinem radial innenliegenden Abschnitt in die Eingriffsnut (32) eingreifen kann, während er mit dem Abschnitt der Einstellnut (30) mit kleinem Durchmesser in Eingriff ist, um so den Kolben (10) in den Zylinder (9) hineingeschoben zu halten, und sich durch weiteres Hineinschieben des Kolbens (10) in den Zylinder (9) der Einstellring (31) in den Abschnitt der Einstellnut (30) mit großem Durchmesser hineinbewegt und sich radial ausdehnt und aus der Eingriffsnut (32) löst.

10. Kettenspannvorrichtung nach einem der Ansprüche 1 bis 9, wobei das Außengewinde (21) am Außenumfang des Zylinders (9) näher an dem geschlossenen Ende des Zylinders (9) liegt als der Abschnitt des Zylinders (9), an dem der Kolben (10) entlang gleitet, so dass das Außengewinde (21) am Außenumfang des Zylinders (9) den Austrittsspalt (39) radial nicht überlappt.

11. Kettenspannvorrichtung nach Anspruch 10, wobei der Zylinder (9) aus Aluminium besteht.

12. Kettenspannvorrichtung nach Anspruch 10 oder 11, wobei die radiale Abmessung des Austrittspalts (39) die Differenz zwischen den Radien der Gleitflächen des Kolbens (10) und des Zylinders (9) ist, die 0,015 bis 0,080 mm beträgt.

13. Kettenspannvorrichtung nach einem der Ansprüche 1 bis 12, die des Weiteren einen O-Ring (37) umfasst, mit dem ein Zwischenraum zwischen dem Innenumfang des Anbringungslochs (12) für die Spannvorrichtung und dem Außenumfang des Zylinders (9) an einer Position geschlossen wird, die näher an dem offenen Ende des Zylinders (9) liegt als der Einlass des Ölzuführkanals (26).

## Revendications

1. Tendeur de chaîne comprenant
un cylindre cylindrique (9) ayant une extrémité ouverte et une extrémité fermée et inséré dans un trou de montage de tendeur (12) formé dans un couvercle de moteur (11), l'extrémité ouverte étant située à l'intérieur du couvercle de moteur (11), ledit cylindre (9) ayant une bride (13) formée sur sa périphérie extérieure et supportée sur la surface extérieure du couvercle de moteur (11), un plongeur (19) installé d'une manière axialement coulissante dans le cylindre (9), ledit cylindre (9) présentant un passage d'amenée d'huile (26) à travers lequel l'huile hydraulique amenée dans un trou d'huile (28) ouvert vers la périphérie intérieure du trou de montage de tendeur (12) est introduite dans une chambre de pression (25) définie par le cylindre (9) et le plongeur (10), un clapet anti-retour (29) réalisé au passage d'amenée d'huile (26) pour empêcher le reflux de l'huile hydraulique, un ressort de rappel (19) sollicitant le plongeur (10) dans une réaction pour faire saillie du cylindre (9) et
un élément d'étanchéité annulaire (14) disposé entre la bride (13) et le couvercle de moteur (11), où un espace de fuite (39) est défini entre les surfaces de glissement du plongeur (10) et le cylindre (9) à travers lequel l'huile hydraulique dans la chambre de pression (25) peut fuir, un filetage externe (21) et une surface cylindrique (22) sont formés sur la périphérie extérieure du cylindre, la surface cylindrique (22) étant située plus près de l'extrémité ouverte du cylindre (9) que le filetage extérieur (21), et un filetage intérieur (23) et une surface cylindrique (24) sont formés sur la périphérie intérieure du trou de montage de tendeur (12), le filetage interne (23) en prise de filetage avec le filetage externe (21) et la surface cylindrique (24) sur la périphérie intérieure du trou de montage de tendeur (12) ajusté autour de la surface cylindrique (22) sur la périphérie extérieure du cylindre (9), **caractérisé en ce que** l'élément d'étanchéité annulaire (14) ayant soit une pluralité de portions droites circonférentiellement espacées (36) le long de sa périphérie intérieure qui sont en contact avec la périphérie extérieure du cylindre (9) avec un ajustement serré, ou étant une rondelle d'étanchéité comprenant un noyau métallique (40), et une lèvre en caoutchouc (41) rapportée sur le noyau métallique (40) et ajustée sur la périphérie extérieure du cylindre (9) avec un ajustement serré.

2. Tendeur de chaîne selon la revendication 1, où la bride (13) possède une périphérie extérieure hexagonale.

3. Tendeur de chaîne selon la revendication 1, où deux surfaces plates (42) sont formées sur la périphérie extérieure de la bride (13).

4. Tendeur de chaîne selon la revendication 1, où une rainure d'engagement d'outil (43) est formée dans la surface d'extrémité fermée du cylindre (9).

5. Tendeur de chaîne selon la revendication 1, où un trou hexagonal (44) est ménagé dans la surface d'extrémité fermée du cylindre (9).

6. Tendeur de chaîne selon l'une quelconque des revendications 1 à 5, où une rainure circonférentielle (27) est formée dans la périphérie extérieure du cylindre (9) à sa portion disposée dans le trou de montage de tendeur (12), et où le passage d'amenée d'huile (28) a son entrée ouverte vers la rainure circonférentielle (27).

7. Tendeur de chaîne selon l'une quelconque des revendications 1 à 6, où une portion d'un grand diamètre (46) est formée sur la périphérie extérieure du cylindre (16) de manière à faire face radialement à la surface cylindre (22) sur la périphérie extérieure du cylindre (9), en définissant ainsi un espace annulaire (47) entre la portion d'un grand diamètre (46) et la périphérie extérieure du cylindre (9), et où ledit passage d'amenée d'huile (26) a son entrée ouverte vers l'espace annulaire (47).

8. Tendeur de chaîne selon l'une quelconque des revendications 1 à 7, où une marque d'identification (45) est réalisée sur la surface d'extrémité fermée du cylindre (9) qui indique la position du passage d'amenée d'huile (26).

9. Tendeur de chaîne selon l'une quelconque des revendications 1 à 8, où une rainure de pose (30) est formée dans la périphérie intérieure du cylindre (9), ladite rainure de pose (30) étant une rainure étagée comprenant une portion d'un petit diamètre et une portion d'un grand diamètre située plus près de l'extrémité fermée du cylindre (9) que la portion de petit diamètre, où le tendeur de chaîne comprend en outre une bague de pose (31) ayant des extrémités circonférentiellement séparées et opposées et reçue dans la rainure de pose (30) dans un état radialement compressé, où une rainure d'engagement (32) est formée dans la périphérie extérieure du plongeur (10), ladite bague de pose (31) pouvant être mise en prise, à sa portion radialement intérieure, avec ladite rainure d'engagement (32) tout en étant engagée dans la portion d'un petit diamètre de ladite rainure de pose (30), en maintenant ainsi le plongeur (10) poussé dans le cylindre (9), moyennant quoi en poussant encore le plongeur (10) dans le cylindre (9), la bague de pose (31) rentre dans la portion d'un grand diamètre de la rainure de pose (30) tout en s'expansant radialement et sort de la prise avec la rainure d'engagement (32).

10. Tendeur de chaîne selon l'une quelconque des revendications 1 à 9, où le filetage externe (21) sur la périphérie extérieure du cylindre (9) est plus près de l'extrémité fermée du cylindre (9) que la portion du cylindre (9) le long de laquelle le plongeur (10) coulisse, moyennant quoi le filetage extérieur (21) sur la périphérie extérieure du cylindre (9) ne recouvre pas radialement l'espace de fuite (39).

11. Tendeur de chaîne selon la revendication 10, où le cylindre (9) est réalisé en aluminium.

12. Tendeur de chaîne selon la revendication 10 ou 11, où la dimension radiale de l'espace de fuite (39) est la différence dans le rayon entre les surfaces de coulissement du plongeur (10) et du cylindre (9), qui est de 0,015 à 0,080 mm.

13. Tendeur de chaîne selon l'une quelconque des revendications 1 à 12, comprenant en outre un joint torique (37) pour fermer un espace entre la périphérie intérieure du trou de montage de tendeur (12) et la périphérie extérieure du cylindre (9) à une position plus près de l'extrémité ouverte du cylindre (9) que l'entrée du passage d'amenée d'huile (26).
